(19) **Europäisches Patentamt / European Patent Office / Office européen des brevets**

(11) **EP 4 691 572 A1**

(12) **EUROPEAN PATENT APPLICATION**
published in accordance with Art. 153(4) EPC

(43) Date of publication:
**11.02.2026 Bulletin 2026/07**

(21) Application number: **24792509.2**

(22) Date of filing: **03.04.2024**

(51) International Patent Classification (IPC):
**A62D 1/06** (2006.01)   **A62C 2/00** (2006.01)

(52) Cooperative Patent Classification (CPC):
**A62C 2/00; A62D 1/06**

(86) International application number:
**PCT/JP2024/013825**

(87) International publication number:
**WO 2024/219233 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 JP 2023067048**
**19.09.2023 JP 2023150854**

(71) Applicant: **Toppan Holdings Inc.**
**Tokyo 110-0016 (JP)**

(72) Inventors:
• **KAKEGAWA Shunta**
**Tokyo 110-0016 (JP)**
• **SHIINE Yasuharu**
**Tokyo 110-0016 (JP)**
• **KUROKAWA Masato**
**Tokyo 110-0016 (JP)**
• **HONJO Yusaku**
**Tokyo 110-0016 (JP)**
• **ISOWA Manami**
**Tokyo 110-0016 (JP)**

(74) Representative: **Pritzlaff, Stefanie Lydia**
**Wagner & Geyer Partnerschaft mbB**
**Patent- und Rechtsanwälte**
**Gewürzmühlstraße 5**
**80538 München (DE)**

(54) **FIRE EXTINGUISHING MATERIAL AND FIRE EXTINGUISHING MATERIAL PACKAGE**

(57) A fire extinguishing material comprising: a fire extinguishing agent layer comprising a fire extinguishing agent containing particulate potassium citrate, in which the potassium citrate has a coating formed from a coating-forming agent on its surface.

**Fig.1**

**Description**

**Technical Field**

The present invention relates to a fire extinguishing material and a fire extinguishing material package.

**Background Art**

A self-extinguishing molded article using a fire extinguishing agent composition containing a component that generates an aerosol upon combustion is known (for example, Patent Literature 1). Examples of such a component include potassium salts, with potassium citrate being particularly preferably used.

**Citation List**

**Patent Literature**

[Patent Literature 1] PCT International Publication No. WO2018/047762

**Summary of Invention**

**Technical Problem**

However, since potassium citrate is deliquescent, it tends to absorb moisture from the surrounding environment over time. When potassium citrate is used as a fire extinguishing agent component, suppressing such deliquescence can further improve the property stability of the fire extinguishing material.

The present invention has been made in view of the above-described circumstances, and an object of the present invention is to provide a fire extinguishing material which contains potassium citrate as a fire extinguishing agent component and has excellent property stability. In addition, another object of the present invention is to provide a fire extinguishing material package in which the fire extinguishing material is enclosed.

**Solution to Problem**

One aspect of the present invention may include, for example, the following aspects.

[1] A fire extinguishing material comprising: a fire extinguishing agent layer comprising a fire extinguishing agent containing particulate potassium citrate,
in which the potassium citrate has a coating formed from a coating-forming agent on its surface.
[2] The fire extinguishing material according to [1], in which the coating-forming agent comprises a compound having an acid anhydride group or an isocyanate group.
[3] The fire extinguishing material according to [1] or [2], in which the fire extinguishing agent further comprises potassium chlorate.
[4] The fire extinguishing material according to any one of [1] to [3], in which the potassium citrate has an average particle diameter D50 of 1 to 100 $\mu$m.
[5] The fire extinguishing material according to any one of [1] to [4], in which the fire extinguishing agent layer comprises 70 to 97 mass% of the fire extinguishing agent.
[6] The fire extinguishing material according to any one of [1] to [5], further comprising: a substrate on which the fire extinguishing agent layer is disposed.
[7] The fire extinguishing material according to any one of [1] to [6], in which the fire extinguishing agent layer has a moisture content of 5 mass% or less after the following storage test.

(Storage test)

A fire extinguishing material package, obtained by enclosing the fire extinguishing material in a packaging material formed from a packaging material film having a water vapor permeability (in accordance with JIS K 7129, under conditions of 40°C/90% RH) of 0.2 to 0.6 $g/m^2$/day, is stored at rest for 12 hours in an environment of 85°C/85% RH.
A fire extinguishing material package comprising: a packaging material; and the fire extinguishing material according to any one of [1] to [7] enclosed in the packaging material.

**Advantageous Effects of Invention**

According to the present invention, it is possible to provide a fire extinguishing material which contains potassium citrate as a fire extinguishing agent component and has excellent property stability. In addition, according to the present invention, it is possible to provide a fire extinguishing material package in which the fire extinguishing material is enclosed.

**Brief Description of Drawings**

FIG. 1 is a schematic cross-sectional view of a fire extinguishing material according to one embodiment.
FIG. 2 is a schematic cross-sectional view of a fire extinguishing material package according to one embodiment.

**Description of Embodiments**

Hereinafter, preferred embodiments of the present disclosure will be described in detail. However, the present disclosure is not limited to the following embodiments.

<Fire extinguishing material>

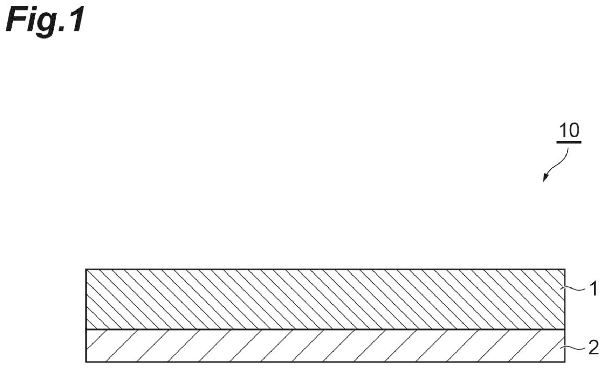

FIG. 1 is a schematic cross-sectional view of a fire extinguishing material according to one embodiment. A fire extinguishing material 10 includes a fire extinguishing agent layer 1 and a substrate 2 on which the fire extinguishing agent layer 1 is disposed. It can be said that the fire extinguishing material 10 includes the substrate 2 and the fire extinguishing agent layer 1 disposed on the substrate 2. The fire extinguishing material 10 may be a sheet-shaped fire extinguishing material. The fire extinguishing material 10 may not include the substrate 2, and in such a case, it may be the fire extinguishing agent layer 1 itself.
From the viewpoint of installing the fire extinguishing material at a desired position, the fire extinguishing material may further include an adhesive layer or a pressure-sensitive adhesive layer. The adhesive layer or the pressure-sensitive adhesive layer may be provided on the fire extinguishing agent layer 1 side or on the substrate 2 side.

(Fire extinguishing agent layer)

The fire extinguishing agent layer contains a particulate fire extinguishing agent. The fire extinguishing agent includes an aerosol-generating agent, and fire extinguishing can be performed by generating an aerosol derived from the aerosol-generating agent from the fire extinguishing agent layer.
The fire extinguishing agent includes particulate potassium citrate as the aerosol-generating agent. The potassium citrate as used herein refers to monopotassium citrate, dipotassium citrate, tripotassium citrate, or hydrates thereof. Potassium citrate has an excellent ability to generate potassium radicals which exhibit a negative catalytic effect on combustion.
The fire extinguishing agent may include other aerosol-generating agents, and may include, for example, organic salts such as organic potassium salts (excluding potassium citrate), organic sodium salts, and organic ammonium salts. From the viewpoint of usefulness for the negative catalytic effect, organic potassium salts are preferred, and examples of organic potassium salts other than potassium citrate include potassium carboxylic acid salts such as potassium acetate, potassium tartrate, potassium lactate, potassium oxalate, and potassium maleate.
The amount of potassium citrate contained in the aerosol-generating agent can be 80 mass% or more based on the total amount of the aerosol-generating agent from the viewpoint of easily obtaining an excellent negative catalytic effect, and may be 100 mass%.
The fire extinguishing agent can include an oxidizing agent as a component other than the aerosol-generating agent. The oxidizing agent acts on the aerosol-generating agent to promote aerosol generation.
The fire extinguishing agent can include (particulate) potassium chlorate as the oxidizing agent. Potassium chlorate is excellent in the ability of generating an aerosol from the aerosol-generating agent.
The fire extinguishing agent may include other oxidizing agents, and may include, for example, sodium chlorate, strontium chlorate, ammonium chlorate, magnesium chlorate, potassium nitrate, sodium nitrate, strontium nitrate, ammonium perchlorate, potassium perchlorate, basic copper nitrate, copper(I) oxide, copper(II) oxide, iron(II) oxide, iron(III) oxide, or molybdenum trioxide.
The amount of potassium chlorate included in the oxidizing agent can be 80 mass% or more based on the total amount of the oxidizing agent from the viewpoint of easily obtaining an excellent aerosol-generating action, and may be 100 mass%.

The fire extinguishing agent may include other agents (components) besides the aerosol-generating agent and the oxidizing agent. Examples of other agents include colorants, antioxidants, flame retardants, inorganic fillers, fluidity imparting agents, moisture-proof agents, dispersants, UV absorbers, flexibility imparting agents, and catalysts.

The amount of the aerosol-generating agent and the oxidizing agent (in some cases, potassium citrate and potassium chlorate) included in the fire extinguishing agent can be 60 mass% or more based on the total amount of the fire extinguishing agent from the viewpoint of easily exhibiting excellent fire extinguishing performance, and may be 90 mass% or more or 100 mass%.

The amount of the oxidizing agent (in some cases, potassium chlorate) included in the fire extinguishing agent can be 5 to 1200 parts by mass per 100 parts by mass of the total amount of the aerosol-generating agent (in some cases, potassium citrate) from the viewpoint of easily exhibiting excellent fire extinguishing performance.

The average particle diameter D50 of potassium citrate may be 1 to 100 $\mu$m, or 3 to 40 $\mu$m. When the average particle diameter D50 is greater than or equal to the above-described lower limit, dispersal in the system tends to be easy, and when the average particle diameter D50 is less than or equal to the above-described upper limit, the stability when preparing a composition for coating improves, and the smoothness of the coated surface tends to improve.

The average particle diameter D50 can be measured by a wet method using a laser diffraction particle size distribution measuring device. The average particle diameter D50 can be adjusted by pulverizing potassium citrate in a mortar or the like.

The amount of the fire extinguishing agent can be 70 to 97 mass% based on the total amount of the fire extinguishing agent layer, and may be 85 to 92 mass%. When the amount of the fire extinguishing agent is equal to or less than the above-described upper limit, it is easy to suppress deliquescence of the salt and to form a homogeneous fire extinguishing material, and when the amount of the fire extinguishing agent is greater than or equal to the above-described lower limit, it is easy to exhibit the fire extinguishing performance of the fire extinguishing material.

The potassium citrate included in the fire extinguishing agent has a coating formed from a coating-forming agent on its surface. The potassium citrate can also be said to be one that is surface-treated with the coating-forming agent. In potassium citrate, hydroxyl groups (-OH) are formed on its surface by adsorption of water molecules in the air, and it is considered that these hydroxyl groups react (condense, add) with reactive groups possessed by the coating-forming agent, thereby forming a coating formed from the coating-forming agent on the potassium citrate surface. From this, the coating-forming agent can also be said to be a coating agent that adsorbs to the surface of the fire extinguishing agent (potassium citrate) by chemical bonding.

Examples of the coating include an organosilane film or a resin film. The coating is preferably a hydrophobic coating.

In this way, a material that attracts the potassium citrate surface by chemical forces and adsorbs to the surface to form a coating is called a coating-forming agent, which is different from materials such as binders that merely physically retain the potassium citrate by surrounding it.

The coating-forming agent includes at least one having reactive groups that react with the hydroxyl groups on the potassium citrate surface as described above.

Examples of the coating-forming agent include silane coupling agents having a reactive group such as an acid anhydride group or an isocyanate group, and a hydrolyzable group such as an alkoxysilyl group. It is considered that the silane coupling agent binds to the potassium citrate surface via the reactive group, and further, hydrolysis condensation of the hydrolyzable group progresses, thereby forming a coating (organosilane film) on the potassium citrate surface. Examples of such silane coupling agents include X-12-1287A and X-12-967C manufactured by Shin-Etsu Chemical Co., Ltd.

Examples of the coating-forming agent also include a resin having a reactive group such as an acid anhydride group or an isocyanate group and a reactive group such as a hydroxyl group, or a resin composition including compounds separately having these groups. Examples of such resins include rosin, and examples of the resin composition include compositions including polyisocyanate and polyols (such as acrylic polyols, polyether polyols, polyester polyols). It is considered that these resins or resin compositions form a coating (resin film) on the potassium citrate surface. Examples of such resins include MALKYD No. 33 manufactured by Arakawa Chemical Industries, Ltd., and examples of the resin compositions include those including Takenate D-110N manufactured by Mitsui Chemicals, Inc. and 6AN-5000 manufactured by Taisei Fine Chemical Co., Ltd.

The coating-forming agent preferably has an alkyl chain from the viewpoint of improving the hydrophobicity of the coating. From the same viewpoint, the coating-forming agent may have an alkene skeleton (for example, a butadiene skeleton), or may have a cyclic alkane structure.

The coating may be formed (continuously) on the entire surface of potassium citrate, or may be formed partially. In view of the balance between deliquescence suppression and reactivity of potassium citrate, the degree of coating by the coating can be adjusted.

The coating on the potassium citrate surface can be observed, for example, by performing elemental analysis of the fire extinguishing agent surface (potassium citrate surface) by energy dispersive X-ray spectroscopy (EDS) using a scanning electron microscope JSM-7001F (manufactured by JEOL Ltd.).

The presence or absence of the coating on the potassium citrate surface can also be simply determined, for example, by adding the fire extinguishing agent to pure water (for example, 5% by weight). For example, when a hydrophobic coating is not formed, potassium citrate dissolves and potassium chlorate remains without dissolving. On the other hand, when a hydrophobic coating is formed, dissolution of potassium citrate, which is easily soluble in pure water, is inhibited, and aggregates are formed in water, so that the presence of the coating can be determined. In addition, when a hydrophilic coating is formed, potassium chlorate, which is insoluble in pure water, dissolves, so that the presence of the coating can be determined.

The fire extinguishing agent layer can include a binder. The binder includes at least one of a thermoplastic resin and a thermosetting resin.

Examples of the thermoplastic resin include polyolefin resins such as polypropylene resins, polyethylene resins, poly(1-)butene resins, and polypentene resins; polystyrene resins, acrylonitrile-butadiene-styrene resins, methyl methacrylate-butadiene-styrene resins, ethylene-vinyl acetate resins, ethylene-propylene resins, polycarbonate resins, polyphenylene ether resins, acrylic resins, polyamide resins, polyvinyl chloride resins, polyvinyl alcohol (PVA), and polyvinyl acetal resins.

Examples of the thermosetting resin include rubbers such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polysulfide rubber (T), silicone rubber (Q), fluororubber (FKM, FZ), and urethane rubber (U); polyurethane resins (for example, ether-based polyurethane resins), polyisocyanate resins, polyisocyanurate resins, phenol resins, epoxy resins, and polyvinyl ether (PMVE)-maleic anhydride resins.

Among the above-described resins, a polyvinyl acetal resin or a polyurethane resin can be suitably used from the viewpoint of film-forming property. Examples of the polyvinyl acetal resin include polyvinyl butyral (PVB).

The binder may include other agents (components) besides the above-described resins (thermoplastic resin and thermosetting resin). Examples of other agents include curing agents. In addition, from the viewpoint of property stability, examples thereof include surfactants, silane coupling agents, and anti-blocking agents. These other components can be appropriately selected depending on the type of resin.

The amount of the above-described resin included in the binder can be 60 mass% or more based on the total amount of the binder from the viewpoint of forming the fire extinguishing agent layer, and may be 90 mass% or more or 100 mass%.

The amount of the binder can be 2 to 30 parts by mass per 100 parts by mass of the fire extinguishing agent, and may be 4 to 15 parts by mass. When the amount of the binder is less than or equal to the above-described upper limit, it is easy to exhibit the fire extinguishing performance of the fire extinguishing material, and when the amount of the binder is greater than or equal to the above-described lower limit, it is easy to form a homogeneous fire extinguishing material.

The thickness of the fire extinguishing agent layer can be 80 to 600 $\mu$m, and may be 150 to 300 $\mu$m. When the thickness is greater than or equal to the above-described lower limit, it is easy to exhibit fire extinguishing performance, and when the thickness is less than or equal to the above-described upper limit, it is easy to obtain bending resistance.

The area of the main surface of the fire extinguishing agent layer is not particularly limited since it is adjusted according to its application, but is set sufficiently large relative to the area of the side surface. The area of the main surface can be, for example, 10 to 624 cm$^2$.

(Substrate)

As a substrate, a resin substrate can be selected in view of the fact that the flame temperature is generally about 700°C to 900°C. For example, examples of the material for the substrate include polyolefins (such as LLDPE, PP, COP, and CPP), polyesters (such as PET), fluororesins (such as PTFE, ETFE, EFEP, PFA, FEP, and PCTFE), PVC, PVA, acrylic resins, epoxy resins, polyamides, and polyimides. Even when the fire extinguishing material is installed so that the substrate side faces the flame, these resins are easily melted by the heat of the flame (generally about 700°C to 900°C), making it easy to expose the fire extinguishing agent layer. In addition, by selecting these transparent materials, it becomes easy to visually inspect the fire extinguishing agent layer and to check the replacement timing of the fire extinguishing agent layer. The substrate may include the above-described fire extinguishing agent.

From the viewpoint of adjusting the water vapor permeability, the substrate may be provided with a vapor-deposited layer having water vapor barrier properties (alumina vapor-deposited layer or silica vapor-deposited layer). The vapor-deposited layer may be provided on one surface of the substrate or on both surfaces.

The thickness of the substrate can be appropriately adjusted according to the assumed heat amount, impact, allowable installation space, and the like at the time of fire outbreak. For example, a thick substrate makes it easy to obtain strength and rigidity as a fire extinguishing material, and handling becomes easy. In addition, a thin substrate allows the fire extinguishing material to be provided in a narrow space, and since it melts in a short time when heated by flame, the initial fire extinguishing property improves. The thickness of the substrate can be, for example, 4.5 to 100 $\mu$m, and may be 12 to 50 $\mu$m. The substrate may be a laminate including a plurality of layers.

<Method for producing fire extinguishing material>

The fire extinguishing material can be formed using a composition for forming a fire extinguishing agent layer (coating liquid). A method for producing the fire extinguishing material is exemplified below.

A first method for producing the fire extinguishing material can include:

a step of mixing a fire extinguishing agent, a coating-forming agent, and a binder with a liquid medium to prepare a composition for forming a fire extinguishing agent layer; and
a step of applying the composition for forming a fire extinguishing agent layer on a substrate and drying it to form a fire extinguishing agent layer.

A second method for producing the fire extinguishing material can include:

a step of treating a fire extinguishing agent with a coating-forming agent;
a step of mixing the fire extinguishing agent treated with the coating-forming agent and a binder with a liquid medium to prepare a composition for forming a fire extinguishing agent layer; and
a step of applying the composition for forming a fire extinguishing agent layer on a substrate and drying it to form a fire extinguishing agent layer.

A third method for producing the fire extinguishing material can include:

a step of treating potassium citrate with a coating-forming agent; a step of mixing a fire extinguishing agent including the potassium citrate treated with the coating-forming agent and a binder with a liquid medium to prepare a composition for forming a fire extinguishing agent layer; and
a step of applying the composition for forming a fire extinguishing agent layer on a substrate and drying it to form a fire extinguishing agent layer.

Examples of the liquid medium include organic solvents. Examples of the organic solvent include water-soluble solvents, for example, alcohols such as methanol, ethanol, isopropyl alcohol, and n-propyl alcohol; ketones such as acetone and methyl ethyl ketone; glycols such as ethylene glycol and diethylene glycol; and glycol ethers such as N-methylpyrrolidone (NMP), tetrahydrofuran, and butyl cellosolve. From the viewpoint that potassium citrate is deliquescent, the liquid medium may be an alcoholic solvent, specifically ethanol, isopropyl alcohol, or a mixed solvent thereof.

The amounts of the fire extinguishing agent and the binder may be adjusted so that their amounts in the fire extinguishing agent layer become the above-described desired amounts. The amount of the liquid medium may be appropriately adjusted according to the method of using the composition for forming a fire extinguishing agent layer, but can be 30 to 70 mass% based on the total amount of the composition for forming a fire extinguishing agent layer. The composition for forming a fire extinguishing agent layer, which includes the liquid medium, can be referred to as a coating liquid for forming a fire extinguishing agent layer.

Examples of the method of treating an object with the coating-forming agent include mixing the object with the coating-forming agent. The amount of the coating-forming agent may be adjusted so that a desired coating is formed on the potassium citrate surface. The amount of the coating-forming agent is, from the viewpoint of easily suppressing deliquescence of potassium citrate, preferably 1 part by mass or more per 100 parts by mass of potassium citrate and more preferably 5 parts by mass or more. In addition, the amount of the coating-forming agent is, from the viewpoint that aerosol generation from potassium citrate is hardly suppressed, preferably 30 parts by mass or less per 100 parts by mass of potassium citrate and more preferably 20 parts by mass or less.

The fire extinguishing agent or each component included in the fire extinguishing agent may be pulverized in a mortar or the like so as to have a desired particle diameter before being subjected to each of the above-described steps.

The application of the composition for forming a fire extinguishing agent layer can be performed by a wet coating method. Examples of the wet coating method include a gravure coating method, a comma coating method, a dip coating method, a curtain coating method, a spin coating method, a sponge roll method, and a die coating method.

The drying temperature of the coating film obtained by application is not particularly limited, but can be, for example, 60°C to 100°C.

Only the fire extinguishing agent layer of the fire extinguishing material obtained as described above may be peeled off from the substrate and used as the fire extinguishing material, and in that case, it is preferable that the substrate is subjected to release treatment.

In addition to the method of producing the fire extinguishing material using the composition for forming a fire extinguishing agent layer (coating liquid) as described above, for example, the fire extinguishing material can also be produced by filling the fire extinguishing agent into a packaging bag for a fire extinguishing agent to form a fire extinguishing agent layer, and then attaching it to the substrate with an adhesive or a pressure-sensitive adhesive.

Alternatively, the fire extinguishing agent layer itself obtained by filling the fire extinguishing agent into the packaging bag for a fire extinguishing agent can also be used as the fire extinguishing material.

The packaging bag for a fire extinguishing agent can be formed, for example, by heat-sealing (heat-fusing) four sides of two resin films. Examples of the resin constituting the resin film include polyolefins (such as LLDPE, PP, COP, and CPP), polyesters (such as PET), fluororesins (such as PTFE, ETFE, EFEP, PFA, FEP, and PCTFE), PVC, PVA, acrylic resins, epoxy resins, polyamides, and polyimides. These resins are melted by the heat of the flame (generally about 700°C to 900°C), making it easy to expose the internal fire extinguishing agent.

<Fire extinguishing material package>

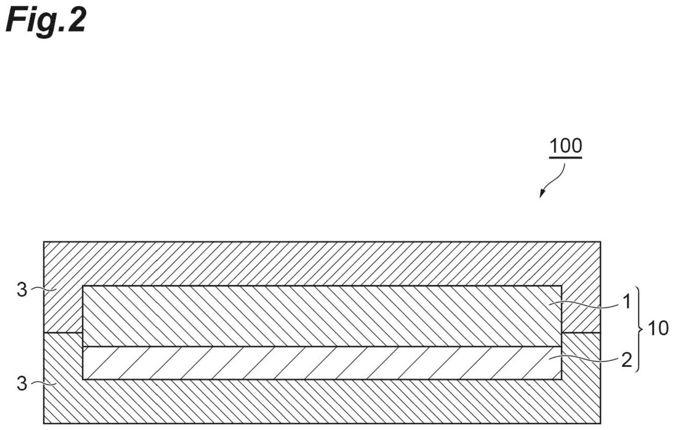

FIG. 2 is a schematic cross-sectional view of a fire extinguishing material package according to one embodiment. A fire extinguishing material package 100 includes a packaging material 3 and a fire extinguishing material 10 enclosed in the packaging material 3. In the figure, the fire extinguishing material 10 includes a fire extinguishing agent layer 1 and a substrate 2, but the fire extinguishing material 10 may consist of the fire extinguishing agent layer 1 itself without using the substrate 2.

The packaging material 3 may be bag-shaped, that is, it can also be called a packaging bag.

(Packaging material)

The packaging material is formed from a packaging material film including, for example, resin substrates such as polyolefin resins, polyester resins, fluororesins, vinyl resins, acrylic resins, epoxy resins, polyamides, polyimides, urethane resins, styrene-based resins, polycarbonates, ketone resins, sulfone-based resins, or cellulose-based resins, or metal substrates such as aluminum foil.

The packaging material film can include, in addition to the above-described substrate, a sealant layer having heat sealability. The sealant layer is not particularly limited, and examples thereof include a non-oriented polypropylene (CPP) film and a linear low-density polyethylene (L-LDPE) film.

The packaging material film desirably has water vapor barrier properties, and may be a so-called barrier film (water vapor barrier film). The water vapor permeability of the packaging material film (in accordance with JIS K 7129, under conditions of 40°C/90% RH) can be 10 $g/m^2$/day or less, and may be 1 $g/m^2$/day or less or 0.6 $g/m^2$/day or less. The lower limit of the water vapor permeability is not particularly limited, but can be, for example, 0.2 $g/m^2$/day. From the viewpoint of adjusting the water vapor permeability, examples of the packaging material film include one including a resin substrate (for example, a polyester resin layer such as a PET layer) including a metal oxide vapor-deposited layer such as an alumina vapor-deposited layer or a silica vapor-deposited layer. When the resin substrate includes a metal oxide vapor-deposited layer, the metal oxide vapor-deposited layer may face the fire extinguishing material side.

The packaging material is obtained by forming a bag from the packaging material film. A sealing portion is provided at a portion where the packaging material films at the periphery of the packaging material face each other. In the sealing portion, for example, the packaging material films may be bonded to each other with a bonding material such as a heat-seal material, an adhesive, or a pressure-sensitive adhesive, or when the packaging material films include a sealant layer, the packaging material films may be bonded to each other by heat sealing since the packaging material films themselves have heat sealability (heat fusibility). Such a sealing portion prevents the fire extinguishing material from coming into contact with air, and can suppress deterioration of the fire extinguishing agent included in the fire extinguishing material.

The fire extinguishing material package may be produced by enclosing the fire extinguishing material in a pre-prepared packaging material, or may be produced by laminating the packaging material film and the fire extinguishing material and then sealing the periphery of the packaging material film (or performing full-surface heat lamination).

The adhesion strength between the packaging material films in the sealing portion may be 5 N/15 mm or more, and from the viewpoint of stably enclosing the fire extinguishing agent, may be 7 N/15 mm or more or 10 N/15 mm or more. The adhesion strength can be varied by adjusting the substrate, adjusting the bonding material such as the adhesive, adjusting the heat sealing conditions (heat sealing temperature, pressure, time), or the like.

The adhesion strength between the packaging material films is measured as follows. That is, a sample in which the packaging material films are laminated by heat fusion or a bonding material is prepared. The heat fusion portion or the bonding portion of this sample is cut out to a width of 15 mm, and in accordance with JIS K6854-3, the average strength from the start of peeling until the heat fusion portion or the bonding portion separates when T-peeling is performed at a peeling speed of 300 mm/min using a tensile tester placed in an environment at a room temperature of 23°C is taken as the adhesion strength between the packaging material films.

Since the above-described fire extinguishing material has excellent property stability, for example, the moisture content of the fire extinguishing agent layer after the following storage test using the fire extinguishing material package can be 5 mass% or less, preferably 4 mass% or less or 3 mass% or less.

(Storage test)

A fire extinguishing material package, obtained by enclosing the fire extinguishing material in a packaging material (packaging bag) formed from a packaging material film having a water vapor permeability (in accordance with JIS K 7129, under conditions of 40°C/90% RH) of 0.2 to 0.6 g/m$^2$/day, is stored at rest for 12 hours in an environment of 85°C/85% RH. After storage, the fire extinguishing material package is opened to take out the fire extinguishing material, and the moisture content (%) of the fire extinguishing agent layer is calculated as follows.

[When fire extinguishing material includes only fire extinguishing agent layer]

Using a heat-drying type moisture meter, the fire extinguishing agent layer is heated at 140°C for 5 minutes, and the moisture content of the fire extinguishing agent layer is calculated from the weight difference of the fire extinguishing agent layer before and after heating by the following calculation equation.

Moisture content (%) = (moisture amount (g) of fire extinguishing agent layer / weight (g) of fire extinguishing agent layer before heating) $\times$ 100

[When fire extinguishing material includes substrate and fire extinguishing agent layer] Using a heat-drying type moisture meter, the fire extinguishing material is heated at 140°C for 5 minutes, and the moisture content of the fire extinguishing material is measured from the weight difference before and after heating. Similarly, the moisture content of the substrate alone is measured from the weight difference before and after heating. Then, the moisture content of the fire extinguishing agent layer is calculated by the following calculation equation.

Moisture content (%) = {(moisture amount (g) of fire extinguishing material - moisture amount (g) of substrate) / (weight (g) of fire extinguishing material before heating - weight (g) of substrate before heating)} $\times$ 100

The fire extinguishing material can be installed on an object that may ignite or in its vicinity. The fire extinguishing material package can also be installed in the same manner, but the packaging material may be removed and only the fire extinguishing material may be installed. Examples of installation methods include attaching, placing, and bundling. Examples of objects that may ignite include electric wires, distribution boards, breaker panels, control panels, storage batteries (such as lithium-ion batteries), building materials such as wallpaper used as building materials and ceiling materials, lithium-ion battery collection boxes, trash cans, automobile-related members, outlets, and outlet covers.

For example, in a device in which the fire extinguishing material or the fire extinguishing material package is installed, initial fire extinguishing is automatically performed against ignition in the device, and therefore, such a device can be said to be a device having an automatic fire extinguishing function.

Examples

Hereinafter, the present invention will be described in detail with reference to the following examples, but the present invention is not limited by these examples.

(Example 1)

Potassium chlorate (KClO3) and tripotassium citrate were pulverized in an agate mortar so that the average particle diameter D50 became 12 μm or less to prepare a fire extinguishing agent. A composition for forming a fire extinguishing agent layer was obtained by mixing this fire extinguishing agent with various materials in the following mixing ratio.

· Fire extinguishing agent components (potassium chlorate, tripotassium citrate) 87 parts by mass
· Polyvinyl butyral resin solution (a solution obtained by dissolving 11 parts by mass of polyvinyl butyral resin in 80 parts by mass of ethanol and 9 parts by mass of isopropyl alcohol) 81 parts by mass · Coating-forming agent (silane coupling agent X-12-1287A, Shin-Etsu Chemical Co., Ltd.) 4 parts by mass
· Ethanol 87 parts by mass

The composition for forming a fire extinguishing agent layer was applied to one surface of a polyethylene terephthalate (PET) substrate (trade name: E7002, manufactured by Toyobo Co., Ltd., thickness: 50 μm) using an applicator so that the thickness of the fire extinguishing agent layer after drying became 150 μm, and dried at 75°C for 7 minutes to obtain a fire extinguishing material.

(Example 2)

A fire extinguishing material was obtained in the same manner as in Example 1, except that various materials were prepared as follows.

· Fire extinguishing agent components (potassium chlorate, tripotassium citrate) 87 parts by mass
· Polyvinyl butyral resin solution (a solution obtained by dissolving 11 parts by mass of polyvinyl butyral resin in 80 parts by mass of ethanol and 9 parts by mass of isopropyl alcohol) 45 parts by mass
· Coating-forming agent (silane coupling agent X-12-1287A, Shin-Etsu Chemical Co., Ltd.) 8 parts by mass
· Ethanol 87 parts by mass

(Example 3)

A fire extinguishing material was obtained in the same manner as in Example 1, except that various materials were prepared as follows.

· Fire extinguishing agent components (potassium chlorate, tripotassium citrate) 87 parts by mass
· Polyvinyl butyral resin solution (a solution obtained by dissolving 11 parts by mass of polyvinyl butyral resin in 80 parts by mass of ethanol and 9 parts by mass of isopropyl alcohol) 81 parts by mass
· Coating-forming agent (silane coupling agent X-12-967C, Shin-Etsu Chemical Co., Ltd.) 4 parts by mass
· Ethanol 87 parts by mass

(Example 4)

A fire extinguishing material was obtained in the same manner as in Example 1, except that various materials were prepared as follows.

· Fire extinguishing agent components (potassium chlorate, tripotassium citrate) 87 parts by mass
· Polyvinyl butyral resin solution (a solution obtained by dissolving 11 parts by mass of polyvinyl butyral resin in 80 parts by mass of ethanol and 9 parts by mass of isopropyl alcohol) 81 parts by mass
· Coating-forming agent (rosin MALKYD No. 33, Arakawa Chemical Industries, Ltd.) 4 parts by mass
· Ethanol 87 parts by mass

(Example 5)

A fire extinguishing material was obtained in the same manner as in Example 1, except that various materials were prepared as follows.

· Fire extinguishing agent components (potassium chlorate, tripotassium citrate) 87 parts by mass
· Polyvinyl butyral resin solution (a solution obtained by dissolving 11 parts by mass of polyvinyl butyral resin in 80 parts by mass of ethanol and 9 parts by mass of isopropyl alcohol) 81 parts by mass
· Coating-forming agent (6AN-5000 (acrylic polyol resin, Taisei Fine Chemical Co., Ltd.) 7.8 parts by mass, Takenate D-110N (isocyanate resin, Mitsui Chemicals, Inc.) 1.1 parts by mass) 8.9 parts by mass
· Ethanol 87 parts by mass

(Example 6)

A coating-forming agent (X-12-1287A, Shin-Etsu Chemical Co., Ltd.) was added to tripotassium citrate, and this was pulverized and mixed in an agate mortar so that the average particle diameter D50 of tripotassium citrate became 12 μm or less, thereby obtaining tripotassium citrate having a coating (organosilane film) formed on the surface. A fire extinguishing material was obtained in the same manner as in Example 1 using a composition for forming a fire extinguishing agent layer obtained by mixing this tripotassium citrate with various materials in the following mixing ratio.

· Fire extinguishing agent components (potassium chlorate, tripotassium citrate/coating-forming agent mixture) 91 parts by mass
· Ether-based urethane resin solution (a solution obtained by dissolving 100 parts by mass of ether-based polyurethane resin in 210 parts by mass of isopropyl alcohol) 28 parts by mass
· Ethanol 148 parts by mass

(Comparative Example 1)

A fire extinguishing material was obtained in the same manner as in Example 1, except that various materials were prepared as follows.

· Fire extinguishing agent components (potassium chlorate, tripotassium citrate) 87 parts by mass
· Polyvinyl butyral resin solution (a solution obtained by dissolving 11 parts by mass of polyvinyl butyral resin in 80 parts by mass of ethanol and 9 parts by mass of isopropyl alcohol) 118 parts by mass
· Ethanol 87 parts by mass

(Comparative Example 2)

A fire extinguishing material was obtained in the same manner as in Example 1, except that various materials were prepared as follows.

· Fire extinguishing agent components (potassium chlorate, tripotassium citrate) 87 parts by mass
· Polyvinyl butyral resin solution (a solution obtained by dissolving 11 parts by mass of polyvinyl butyral resin in 80 parts by mass of ethanol and 9 parts by mass of isopropyl alcohol) 81 parts by mass
· Silane coupling agent X-12-1267B (Shin-Etsu Chemical Co., Ltd.) 4 parts by mass
· Ethanol 87 parts by mass

(Evaluation: Coating observation)

Using a scanning electron microscope JSM-7001F (JEOL Ltd.), elemental analysis of the tripotassium citrate particle surface was performed by energy dispersive X-ray spectroscopy (EDS), and the presence or absence of the coating was confirmed. The results are shown in Table 1.

(Evaluation: Property stability)

A barrier film including a sealant layer (linear low-density polyethylene (L-LDPE) resin, thickness 30 $\mu$m) and a substrate layer (polyethylene terephthalate (PET) resin having a silica vapor-deposited film, thickness 12 $\mu$m) (water vapor permeability 0.2 to 0.6 g/m$^2$/day, under conditions of 40°C/90% RH) was prepared.
Two sheets of this barrier film were used to cover the fire extinguishing material of each example, and the four sides of the barrier film were heat-sealed to enclose the fire extinguishing material in a packaging material. The heat sealing conditions were 140°C for 2 seconds, and the seal width was 10 mm. This was used as an evaluation sample (fire extinguishing material package).
The evaluation sample was stored at rest under 85°C/85% RH for a predetermined time, and the total light transmittance change amount $\Delta$ was calculated from the total light transmittance before and after storage. For the measurement of the total light transmittance, a haze meter BYK-Gardner Haze-Guard Plus (manufactured by BYK) was used, and the total light transmittance was measured in a state where the sample was fixed so that light entering the integrating sphere from the light source passed through the fire extinguishing material.

Total light transmittance change amount $\Delta$ (%) = value of total light transmittance after storage - value of total light transmittance before storage

From the obtained total light transmittance change amount $\Delta$, the property stability was evaluated according to the following criteria. The results are shown in Table 1.

A: Stored for 168 hours, and the total light transmittance change amount ∆ was 40% or less.
B: Stored for 12 hours, and the total light transmittance change amount ∆ was 40% or less.
C: Stored for 12 hours, and the total light transmittance change amount ∆ was more than 40%.

(Evaluation: Moisture content)

The fire extinguishing material obtained in each example was cut into 5 cm square, enclosed in the packaging material in the same manner as in the above-described property stability evaluation, and a fire extinguishing material package was obtained. After storing this fire extinguishing material package at rest under 85°C/85% RH for 12 hours, it was opened, and the fire extinguishing material in the packaging material was used as an evaluation sample.

Each evaluation sample was heated at 140°C for 5 minutes using a heat-drying type moisture meter (HB43-S, manufactured by METTLER TOLEDO), and the moisture content of the fire extinguishing material was measured from the weight difference before and after heating. Similarly, the moisture content of the substrate alone was measured from the weight difference before and after heating. Then, the moisture content of the fire extinguishing agent layer was calculated by the following calculation equation. The results are shown in Table 1.

Moisture content (%) = {(moisture content (g) of fire extinguishing material - moisture content (g) of substrate) / (weight (g) of fire extinguishing material before heating - weight (g) of substrate before heating)} × 100

[Table 1]

| | | Example 1 | Example 2 | Example 3 | Example 4 | Example 5 | Example 6 | Comparative Example 1 | Comparative Example 2 |
|---|---|---|---|---|---|---|---|---|---|
| Binder | Type | PVB | PVB | PVB | PVB | PVB | Urethane | PVB | PVB |
| | Mixing ratio (parts hv mass) | 9 | 5 | 9 | 9 | 9 | 9 | 13 | 9 |
| Fire extinguishing agent | Mixing ratio (parts by mass) | 87 | 87 | 87 | 87 | 87 | 87 | 87 | 87 |
| Coating-forming agent | Type | X-12-1287A | X-12-1287A | X-12-967C | MALKYD No. 33 | 6AN-5000 D110N | X-12-1287A | - | X-12-1267B |
| | Mixing ratio (parts by mass) | 4 | 8 | 4 | 4 | 4 | 4 | - | 4 |
| Presence or absence of coating | | Present | Present | Present | Present | Present | Present | Absent | Absent |
| Property stability | | A | A | B | A | A | A | C | C |
| Moisture content (%) | | 2.4 | 1.9 | 2.2 | 1.8 | 2.0 | 2.4 | 5.3 | 5.1 |

The fire extinguishing material of the examples exhibited favorable property stability because a coating was formed on tripotassium citrate having deliquescence. In the fire extinguishing material of the examples, since the coating-forming agent has an alkene skeleton (butadiene skeleton) forming a hydrophobic structure or a cyclic alkane structure, excellent property stability was shown in all cases.

In the fire extinguishing material of the comparative examples, since no coating was formed on tripotassium citrate, the property stability was inferior to that of the examples.

Reference Signs List

1 Fire extinguishing agent layer, 2 Substrate, 3 Packaging material, 10 Fire extinguishing material, 100 Fire extinguishing material package

**Claims**

1. A fire extinguishing material comprising:

   a fire extinguishing agent layer comprising a fire extinguishing agent containing particulate potassium citrate, wherein the potassium citrate has a coating formed from a coating-forming agent on its surface.

2. The fire extinguishing material according to claim 1, wherein the coating-forming agent comprises a compound having an acid anhydride group or an isocyanate group.

3. The fire extinguishing material according to claim 1 or 2, wherein the fire extinguishing agent further comprises potassium chlorate.

4. The fire extinguishing material according to claim 1 or 2, wherein the potassium citrate has an average particle diameter D50 of 1 to 100 $\mu$m.

5. The fire extinguishing material according to claim 1 or 2, wherein the fire extinguishing agent layer comprises 70 to 97 mass% of the fire extinguishing agent.

6. The fire extinguishing material according to claim 1 or 2, further comprising: a substrate on which the fire extinguishing agent layer is disposed.

7. The fire extinguishing material according to claim 1 or 2, wherein the fire extinguishing agent layer has a moisture content of 5 mass% or less after the following storage test:

   (Storage test)
   A fire extinguishing material package, obtained by enclosing the fire extinguishing material in a packaging material formed from a packaging material film having a water vapor permeability (in accordance with JIS K 7129, under conditions of 40°C/90% RH) of 0.2 to 0.6 $g/m^2$/day, is stored at rest for 12 hours in an environment of 85°C/85% RH.

8. A fire extinguishing material package comprising:

   a packaging material; and
   the fire extinguishing material according to claim 1 or 2 enclosed in the packaging material.

## Fig.1

**Fig.2**

## INTERNATIONAL SEARCH REPORT

| | International application No. |
|---|---|
| | **PCT/JP2024/013825** |

**A. CLASSIFICATION OF SUBJECT MATTER**

*A62D 1/06*(2006.01)i; *A62C 2/00*(2006.01)i
FI: A62D1/06; A62C2/00 X

According to International Patent Classification (IPC) or to both national classification and IPC

**B. FIELDS SEARCHED**

Minimum documentation searched (classification system followed by classification symbols)

A62D1/06; A62C2/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/008537 A1 (TOPPAN PRINTING CO., LTD.) 02 February 2023 (2023-02-02) | 1-8 |
| A | US 2021/0260426 A1 (LG CHEM, LTD.) 26 August 2021 (2021-08-26) | 1-8 |
| A | JP 58-019274 A (CHISSO CORPORATION) 04 February 1983 (1983-02-04) | 1-8 |
| A | JP 64-70081 A (GLAVERBEL) 15 March 1989 (1989-03-15) | 1-8 |
| A | WO 2018/047762 A1 (YAMATO PROTEC CORP.) 15 March 2018 (2018-03-15) | 1-8 |
| A | JP 57-9470 A (KOYAMA, Yoshio) 18 January 1982 (1982-01-18) | 8 |
| A | WO 2022/118735 A1 (TOPPAN PRINTING CO., LTD.) 09 June 2022 (2022-06-09) | 8 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2023/008537 | A1 | 02 February 2023 | CN | 117693384 | A | |
| US | 2021/0260426 | A1 | 26 August 2021 | WO | 2020/149547 | A1 | |
| | | | | EP | 3769820 | A1 | |
| | | | | KR | 10-2020-0089439 | A | |
| | | | | CN | 112041035 | A | |
| JP | 58-019274 | A | 04 February 1983 | (Family: none) | | | |
| JP | 64-70081 | A | 15 March 1989 | US | 4968441 | A | |
| | | | | US | 5061382 | A | |
| | | | | GB | 2209467 | A | |
| | | | | DE | 3830122 | A1 | |
| | | | | FR | 2620035 | A1 | |
| | | | | CH | 675361 | A5 | |
| WO | 2018/047762 | A1 | 15 March 2018 | (Family: none) | | | |
| JP | 57-9470 | A | 18 January 1982 | (Family: none) | | | |
| WO | 2022/118735 | A1 | 09 June 2022 | DE | 102020132312 | A1 | |

Form PCT/ISA/210 (patent family annex) (July 2022)

**REFERENCES CITED IN THE DESCRIPTION**

**Patent documents cited in the description**

• WO 2018047762 A